# EUROPÄISCHE PATENTSCHRIFT

(11) **EP 1 186 084 B1**
(45) Veröffentlichungstag und Bekanntmachung des Hinweises auf die Patenterteilung: **06.08.2003**
(21) Anmeldenummer: 00934830.1
(22) Anmeldetag: 14.06.2000
(51) Int. Cl.: H02H 3/02

(54) **ELEKTRISCHE SCHALTEINRICHTUNG ZUM ÜBERSTROMSCHUTZ**
ELECTRICAL CIRCUIT BREAKER FOR PROTECTING AGAINST OVERCURRENTS
DISPOSITIF DE COUPURE ELECTRIQUE POUR LA PROTECTION CONTRE LES SURINTENSITES

(30) Priorität: 17.06.1999 DE 19927762
(43) Veröffentlichungstag der Anmeldung: 13.03.2002
(73) Patentinhaber: ABB RESEARCH LTD., 8050 Zürich (CH)
(72) Erfinder: STRÜMPLER, Ralf, CH-5412 Gebenstorf (CH)
(74) Vertreter: ABB Patent Attorneys
(86) Internationale Anmeldenummer: CH0000325
(87) Internationale Veröffentlichungsnummer: WO00079664

(56) Entgegenhaltungen:
- DE-A- 19 850 397
- GB-A- 2 212 679

## Beschreibung

Die Erfindung betrifft eine elektrische Schalteinrichtung nach dem Oberbegriff von Patentanspruch 1.

Eine solche Schalteinrichtung dient dem Abschalten eines Überstromes in einem Strompfad. Insbesondere richtet sich die Erfindung dabei auf den Bereich der Haushaltsstromversorgung, den Bereich kleinerer und mittlerer Elektromotoren, die Gebäudetechnik, Lichtanlagen sowie elektrische Anlagen in Schienenfahrzeugen, Schiffen und dgl. Diese Anwendungsbereiche können gekennzeichnet werden durch abzuschaltende Spannungen von typischerweise 100 V - 1 kV und typische Lastströme im Bereich von 0,1 A - 75 A, wobei diese Zahlenangaben nicht einschränkend zu verstehen sind. Insbesondere können bei durch einen Kurzschluß oder dgl. verursachten großen Überströmen kurzfristig sehr große Stromwerte auftreten.

Die Erfindung betrifft eine Schalteinrichtung, die sowohl kleinere Überströme, die im Bereich des 1,1- bis 10fachen des zulässigen Maximalstroms liegen, als auch sehr große Überströme von Vielfachen des zulässigen Maximalstroms abschalten können, um eine elektrische Einrichtung vor Schaden zu schützen oder eine Gefährdung der Umgebung und von Personen auszuschließen.

Im Stand der Technik sind hierzu bislang Kombinationen aus elektromagnetischen Schützen, Schmelzsicherungen, thermischen Überlastrelais mit einem Bimetallstreifen als auslösendem Element und dgl. verwendet worden.

Andererseits werden elektrische Anlagen und Einrichtungen gerade im Niederspannungsbereich in jüngster Zeit immer komplexer, wobei andererseits zunehmend das Bedürfnis nach einer Verringerung des Gesamtpreises, des Bauvolumens, des Gewichts und auch der Leistungsverluste besteht.

Eine Schalteinrichtung nach dem Oberbegriff von Patentanspruch 1 ist in US-A-5'430'597 beschrieben. Diese Schalteinrichtung ist in eine zwischen einer Spannungsquelle und einer Last verlaufenden Stromversorgungsleitung geschaltet und weist einen Mikrorelaisschalter, einen Stromsensor sowie eine Auswerteeinrichtung auf, welche den Schalter oberhalb eines Grenzwertes des in der Versorgungsleitung fliessenden Stroms öffnet. Der Mikrorelaisschalter weist auf einem Substrat angeordnet parallel geführte Strompfade auf mit jeweils mehreren in Serie geschalteten Mikrorelaiszellen. Die Anzahl der Strompfade bestimmt die Stromtragfähigkeit, die Anzahl der in Serie geschalteten Mikrorelaiszellen hingegen die Spannungsfestigkeit des Schalters. Die Anzahl an Mikrorelaiszellen ist so bemessen, dass in üblichen Niederspannungswechselstromnetzen auftretende kleine Überströme ausgeschaltet werden können. Beim Schalten grosser Überströme, insbesondere grosser Kurzschlussströme, ist jedoch nicht mit Sicherheit auszuschliessen, dass einzelne Mikrorelaiszellen überlastet werden.

Weitere Schalteinrichtungen mit Mikrorelaiszellen sind in DE-A-198 50 397 und GB-A-2 212 679 beschrieben.

Der Erfindung, wie sie in den Patentansprüchen definiert ist, liegt das technische Problem zugrunde, eine Schalteinrichtung der vorgenannten Art zu schaffen, mit der kleine und grosse Überströme sicher geschaltet werden können.

Ferner richtet sich die Erfindung auch auf ein Elektromotorschalt- und -schutzsystem mit einer solchen verbesserten Schalteinrichtung.

Die grundsätzliche Idee der Erfindung besteht darin, in der erfindungsgemässen Schaltvorrichtung eine Kombination eines Mikrorelaisschalters mit einer Kurzschlussstrom-Begrenzungsvorrichtung zu verwenden. Dabei soll der Mikrorelaisschalter dazu ausgelegt sein, kleine Überströme abzuschalten und kann darüber hinaus auch zum gewöhnlichen Ein- und Ausschalten des Stromes in dem Strompfad im Normalbetrieb dienen. Demgegenüber ist die Vorrichtung zum Kurzschlußstrombegrenzen speziell zum Abschalten sehr großer Überströme ausgelegt, die den Mikrorelaisschalter zerstören würden. Eine Auswerteeinrichtung dient zum Erfassen von Überströmen und Auslösen des Mikrorelaisschalters, kann aber bei Bedarf darüber hinaus direkt zum Ein- und Ausschalten angesteuert werden. Damit können durch die Erfindung die konventionellen Bauteile Thermorelais mit Bimetallstreifen und elektromagnetisches Schütz eingespart bzw. durch ein vergleichsweise kleines und leichtes elektromechanisches System ersetzt werden.

Die in der erfindungsgemässen Schalteinrichtung verwendeten Mikrorelaiszellen sind elektrisch betätigte Miniaturschalter. Im Gegensatz zu einem Transistor ist eine Mikrorelaiszelle jedoch ein mechanischer Schalter mit zumindest einem beweglichen Kontaktstück. Durch ein elektrisches Signal kann in verschiedener Weise eine mechanische Bewegung dieses Kontaktstücks hervorgerufen werden. Im allgemeinen werden Mikrorelaisszellen mit den bekannten Verfahren der Mikroelektronik und der Mikrosystemtechnik hergestellt.

Bevorzugt sind bei der Erfindung elektrostatisch betätigte Mikrorelaiszellen, d. h. solche, bei denen das bewegliche Kontaktstück elektrostatisch betätigt wird. Hierzu wird auf die Ausführungsbeispiele verwiesen und auf ein von Siemens publiziertes Si-Mikrorelais (H. F. Schlaak, F. Arndt, J. Schimkat, M. Hanke, Proc. Micro System Technology 96, 1996, Seiten 463-468). Es wird weiterhin verwiesen auf R. Allen: "Simplified Process is Used to Make Micromachined FET-like Four-Terminal Microswitches and Microrelays" in Electronic Design, 8 July, 1996, Seite 31 sowie auf "Micromechanic Membrane Switches on Silicon" von K. E. Petersen, IBM J. RES. DEVELOP., Band 23, Nr. 4, Juli 1979, Seiten 376-385.

Im Vergleich zu konventionellen Bauteilkombinationen bietet die erfindungsgemäße Schalteinrichtung eine erhebliche Gewichts- und Bauvolumenverringerung. Verbessert wird auch die geometrische Flexibilität der Gesamtanordnung, weil der Mikrorelaisschalter in unterschiedlichster Weise eingebaut werden kann, dabei besonders robust und unempfindlich gegen Temperaturschwankungen, Stöße oder dgl. ist und im Fall einer größeren Anordnung einer Vielzahl von Mikrorelaiszellen auch große Freiheiten in der Formgebung zeigt, weil die Leiterbahnen zwischen den Mikrorelaiszellen beliebig formbar sind.

Ein weiterer primärer Vorteil der neuen elektrischen Schalteinrichtung besteht in dem überaus schnellen Ansprechverhalten des Mikrorelaisschalters. Durch die sehr viel geringere Trägheit der bewegten Massen besteht hier ein prinzipieller Vorteil im Vergleich zu Lösungen mit konventionellen Schützen und Relais. Auch bei komplexeren Mikrorelaisschaltern mit einer größeren Zahl von Mikrorelaiszellen gilt dies uneingeschränkt, da hier im wesentlichen die gleiche Ansprechzeit wie bei einer einzelnen Zelle auftritt.

Ferner sind typische Schaltleistungen und auch die Leistungsaufnahme von Mikrorelaisschaltern im Ruhezustand gegenüber konventionellen Relais und Schützen erheblich verringert und tragen somit zur Leistungseinsparung und zur Entschärfung thermischer Probleme insbesondere in größeren Systemen bei. Des weiteren bietet sich die erfindungsgemäße Schalteinrichtung zur Kombination und auch Integration mit anderen halbleitertechnologischen Einrichtungen, insbesondere Transistoren und integrierten Schaltungen, an, weil erhebliche Entsprechungen und Überschneidungen in den Herstellungsverfahren bestehen. Dadurch können Gewicht, Volumen und auch Kosten weiter verringert werden.

Die Auswerteeinrichtung ist eine vorzugsweise mikroelektronisch realisierte Schaltung, deren nähere Ausgestaltung dem Fachmann im Hinblick auf die bei den verschiedenen Ausführungsformen der Erfindung jeweils geforderten Funktionen ohne weiteres klar ist. Dabei kann die Auswerteeinrichtung dazu ausgelegt sein, gegenüber dem physikalisch schnellstmöglichen Ansprechverhalten des Mikrorelaisschalters eine gewisse Zeitverzögerung, insbesondere auch in Abhängigkeit von der Höhe eines gemessenen Überstromes, zu bewirken. Nähere Erklärungen hierzu finden sich bei der Beschreibung der Ausführungsbeispiele.

Da mit elektrischen Schalteinrichtungen zum Überstromschutz unterschiedlichste Strom- und Spannungsanforderungen abgedeckt werden müssen, bietet sich die Herstellung des Mikrorelaisschalters durch eine weitgehend feststehende Standardtechnologie mit unterschiedlichen Layoutgeometrien, also unterschiedlichen Maskensätzen, an. Bei einer weitgehenden technologischen Vereinheitlichung der Herstellungslinie ist dabei die Abdeckung unterschiedlichster elektrischer Spezifikationen möglich.

Da Mikrorelaisschalter jedenfalls im Bereich der gegenwärtigen Technologie jedoch gewisse Grenzen im Hinblick auf ihre Strom- und Spannungsbelastbarkeit im Betrieb und auch beim Abschalten aufweisen, bezieht sich die Erfindung auf eine Kombination mit einem weiteren speziell für das Abschalten großer Überströme ausgelegten Element. Hier ist von einem Kurzschlußstrombegrenzer die Rede, wobei dieser Begriff dabei nur eine häufige Ursache solch großer Überströme bezeichnet, jedoch nicht einschränkend ist. Der Begriff Kurzschlußstrom steht insoweit synonym für große Überströme, die die Abschaltkapazität des Mikrorelaisschalters deutlich übersteigen.

Eine besonders einfache Variante eines Kurzschlußstrombegrenzers ist eine konventionelle Schmelzsicherung, die einen großen Überstrom durch Aufschmelzen eines Glühfadens oder einer Leiterbahn unterbricht, jedoch nicht repetitiv arbeitet, also ausgetauscht werden muß. Eine solche Schmelzsicherung wird durch den Überstrom selbst ausgelöst und benötigt somit keine Ansteuerung durch die Auswerteeinrichtung.

Eine weitere Möglichkeit besteht jedoch in einer elektrisch betätigbaren Lösung für den Kurzschlußstrombegrenzer. Dabei ist es möglich, jedoch nicht notwendig, für die Ansteuerung des Kurzschlußstrombegrenzers ein weiteres Ansteuersignal (im Folgenden als zweites Ansteuersignal bezeichnet) derselben Auswerteeinrichtung zu verwenden, die auch den Mikrorelaisschalter ansteuert. Beispielsweise kann ein elektrisch ausgelöster Leistungsschutzschalter verwendet werden. Aber auch der Einsatz eines gänzlich konventionellen Leistungsschutzschalters, etwa mit einem durch einen Kurzschlußstrom versorgten elektromagnetischen Antrieb ist möglich.

Eine weitere Variante der Erfindung besteht darin, als Kurzschlußstrombegrenzer oder ergänzend zu einem anderen Schalter in einem Kurzschlußstrombegrenzer einen PTC-Widerstand zu verwenden. Ein solcher PTC-Widerstand ist definiert durch einen positiven Temperaturkoeffizienten des elektrischen Widerstandes, der so erheblich ist, daß sich durch die Erwärmung des Widerstandes bei sehr großen Überströmen ein ausreichend starker Anstieg des Widerstandswerts ergibt, um den Überstrom auf für den Mikrorelaisschalter abschaltbare Werte zu begrenzen. Dies ist die Erklärung für die Verwendung des Begriffs Kurzschlußstrombegrenzer, die also sowohl den Kurzschlußstrom vollständig unterbrechende Bauteile als auch ihn auf für den Mikrorelaisschalter abschaltbare Werte begrenzende Bauteile umfaßt.

Als PTC-Materialien kommen bevorzugt PTC-Polymere in Frage, die im allgemeinen aus einer Polymermatrix mit einem darin verteilten und die elektrische Leitfähigkeit fördernden Füllmaterial bestehen. Das Füllmaterial können z. B. Metallpartikel, Carbide, Boride, Nitride, Kohlekurzfasern, leitfähige Polymerpartikel oder auch Ruß sein. Eine Abgrenzung kann erfolgen durch einen Widerstandsanstieg in einem Temperaturintervall von 14 K um mindestens den Faktor 2,5 oder in einem Temperaturintervall von 30 K um den Faktor 6 oder in einem Temperaturintervall von 100 K um den Faktor 10, wobei die Erfüllung eines Kriteriums zur Definition genügt. Bevorzugt sind dabei Faktoren von 5, 20 und 100 bzw. von 7,5 und 100 und 1000 in den jeweiligen Temperaturintervallen.

Gemäß einer weiteren Variante der Erfindung enthält die Schalteinrichtung ferner eine Fehlerstromschutzfunktion. Dazu wird entweder durch zwei Stromsensoren der Strom durch zwei Strompfade erfaßt, verglichen, und dem Resultat dieser Auswertung entsprechend zumindest ein Mikrorelaisschalter in einem der beiden Strompfade geöffnet, oder es kann auch über einen hier als Gesamtstromsensor bezeichneten Stromsensor ein Gesamtstrom durch zwei benachbarte Strompfade erfaßt und ausgewertet werden, um den Mikrorelaisschalter zu öffnen. Dabei ist an einen Stromsensor gedacht, der aufgrund der räumlichen Verhältnisse, die für die Fehlerstromerfassung errechnete Summe aus beiden Strömen unter Berücksichtigung ihrer Richtungen erfaßt. Beispielsweise können zwei Leiterbahnen als Strompfade die zu vergleichenden Ströme in einander entgegengesetzten Richtungen führen, wobei der Gesamtstromsensor den Gesamtstrom erfaßt, im Falle von Betragsgleichheit also einen Nullstrom. Dementsprechend muß das Signal des Gesamtstromsensors durch die Auswerteeinrichtung nur noch mit einem entsprechend kleinen Schwellenwert verglichen werden, um den Mikrorelaisschalter anzusteuern.

Die Fehlerstromschutzfunktion kann sich natürlich auch auf mehr als zwei Strompfade beziehen, beispielsweise mit vier Stromsensoren für einen Dreiphasenstrom mit Nulleitung.

Die in dieser Beschreibung verschiedentlich erwähnten Stromsensoren müssen nicht notwendigerweise Bestandteil der erfindungsgemäßen Schalteinrichtung sein. Es kann sich im einfachsten Fall um konventionelle Stromsensoren handeln, beispielsweise um Induktionsspulen. Bevorzugt richtet sich die Erfindung jedoch auf Hall-Sensoren, die mit sehr geringen Nachweisgrenzen realisierbar sind, beispielsweise mit Nachweisgrenzen von etwa 1 mA im Vergleich zu konventionellen Nachweisgrenzen von ungefähr 10 mA oder mehr. Hall-Sensoren sind ferner als Halbleiterelemente sehr viel kleiner, leichter und auch preiswerter zu realisieren als konventionelle Induktionsspulen.

Der Begriff Mikrorelaisschalter kann nach den vorstehenden Ausführungen sowohl ein einzelnes Mikrorelais als auch eine Schaltung aus einer größeren Zahl von Mikrorelaiszellen bedeuten. Dies ist vor allem dahingehend zu verstehen, daß jedenfalls im gegenwärtigen Entwicklungsstand Mikrorelais nicht mit unbeschränkter Stromtragfähigkeit und Spannungsfestigkeit sowie nur mit begrenzten Möglichkeiten zum Abschalten größerer Leistungen versehen sind. Wenn über diese gegebenen Grenzen einer einzelnen Mikrorelaiszelle hinausgehende Belastbarkeiten für die ins Auge gefaßten Anwendungen notwendig sind, können erfindungsgemäß spannungsteilende Serienschaltungen aus zwei oder mehreren Mikrorelaiszellen und/oder stromteilende Parallelschaltungen verwendet werden. Im kombinierten Fall handelt es sich dann um Schaltfelder, nämlich um spannungsteilende Serienschaltungen von in jeder Stufe der Serienschaltung stromteilend wirkenden Parallelschaltungen.

In diesem Zusammenhang ist jedoch zu berücksichtigen, daß die technologischen Grenzen in der jetzigen Situation ständigen Veränderungen unterworfen sind. Es sind weitere Verbesserungen im Hinblick auf die Spannungs- und Strombelastbarkeit im leitenden Zustand und auch hinsichtlich des Abschaltvermögens absehbar. Ein Forschungsprojekt des Herstellers Bosch gemeinsam mit einer Gruppe der Universität Bremen arbeitet an der Entwicklung von Mikrorelais mit 24 V maximaler Schaltspannung und 25 A maximalem Schaltstrom, insoweit ist damit zu rechnen, daß auch Anwendungen mit etwas höheren Anforderungen zukünftig schon von einzelnen Mikrorelais erfüllt werden können. Dies betrifft insbesondere die Stromtragfähigkeit. Dann genügt möglicherweise eine entsprechende Serienschaltung für die geforderte Spannungsfestigkeit.

Hier sei noch einmal auf einen bereits ausgeführten Vorteil der für Mikrorelais typischen Technologien verwiesen. Zur Anpassung an eine bestimmte elektrische Auslegung kann eine standardisierte Mikrorelaiszelle mit einer festliegenden Standardtechnologie in unterschiedlichen Größen der Parallelschaltung und/oder Serienschaltung ausgeführt werden. Dazu muß lediglich die Layoutgeometrie verändert werden, etwa durch Verwendung eines anderen Maskensatzes. Das übrige Herstellungsverfahren kann praktisch unverändert bleiben. Dabei geht der ebenfalls bereits erwähnte Vorteil der sehr hohen Ansprechgeschwindigkeit ohne Skalierung unmittelbar in die Gesamtschaltung über. Somit lassen sich vor allem auch bei großen Spezifikationswerten im Vergleich zu entsprechenden konventionellen Schützen äußerst schnell ansprechende Schalteinrichtungen realisieren.

Neben der Integration eines Schaltungsfeldes mehrerer Mikrorelaiszellen sind auch andere Integrationsvarianten für die Erfindung von Bedeutung. Der oder die Mikrorelaisschalter, die Auswerteeinrichtung und gegebenenfalls auch der oder die Hall-Sensoren können einerseits jeweils als Halbleiterchips ausgeführt und auf einer gemeinsamen Platine montiert sein. Bereits hier ergeben sich wesentliche Vorteile durch die Identität oder Ähnlichkeit der Montagetechnologien und durch die kleine Baugröße und das geringe Gewicht der kombinierten Komponenten. Als Beispiel für eine der Mikroelektronik sehr verwandte Bauform eines Hall-Sensors wird hier verwiesen auf "Cylindrical Hall Device" von H. Blanchard, L. Chiesi, R. Racz und R. S. Popovic, Proceedings IEDM 96, Seiten 541-544, IEEE 1996.

Bei einer Kombination mit einem Hall-Sensor kann der Verzicht auf eine vollständige Integration andererseits von Vorteil sein, weil dann eine stärker standardisierte Schalteinrichtung mit je nach Anwendungsfall unterschiedlich ausgelegten Hall-Sensoren auf jeweilige Ansprechwerte festgelegt werden kann.

Natürlich können auch verschiedene Bauteile auf einem Chip miteinander kombiniert sein. Z. B. können die Auswerteeinrichtung und der oder auch die Mikrorelaisschalter integriert sein. Bei geeigneter Technologie betrifft dies auch den oder die Hall-Sensoren. Wenn andererseits nur die Auswerteeinrichtung und der oder die Hall-Sensoren integriert sind, während der oder die Mikrorelaisschalter als separater oder separate Chip(s) ausgeführt sind, erlaubt dies die Kombination eines standardisierten Chips mit Auswerteeinrichtung und Hall-Sensor(n) mit verschiedenen, elektrisch unterschiedlich ausgelegten Mikrorelaisschaltern. Weiterhin sind auch Temperatursensoren, Zeitgeberschaltungen und andere elektronische Einrichtungen kombinierbar und integrierbar.

Ferner betrifft dies auch eine elektronische Ansprechüberwachungseinrichtung, die ebenfalls kombiniert oder integriert sein kann. Eine solche Ansprechüberwachungseinrichtung registriert das Ansprechen der elektrischen Schalteinrichtung und kann beispielsweise eine Sperrung der Schaltungseinrichtung für eine gewisse Zeit nach dem Ansprechen bewirken. Ferner kann nach einem Ansprechen ein definierter Test vorgenommen werden, etwa durch einen kurzen leitenden Zustand, in dem geprüft wird, ob der für das vorherige Ansprechen verantwortliche Fehlerzustand noch vorliegt. Damit kann beispielsweise nach einer vorübergehenden Stromspitze ein automatisches Wiedereinschalten erfolgen. Auch können Schnittstellen zu äußeren Steuerungseinrichtungen vorgesehen sein.

Weiterhin sind auch Zeitgeberschaltungen kombinierbar oder integrierbar, die etwa die Verwendung als Zeitschaltautomat für Beleuchtungsanwendungen, z. B. Treppenhäuser erlauben.

Schließlich sind natürlich auch Einrichtungen zur Anzeige des Ansprechens auf einen Überstrom oder einen Fehlerstrom in optischer oder akustischer Weise möglich.

Ein bevorzugter Anwendungsfall der Erfindung liegt in einem Schalt- und Schutzsystem für einen Elektromotor. Hierauf richten sich auch die im Folgenden im einzelnen beschriebenen Ausführungsbeispiele, wobei dabei offenbarte Merkmale auch in anderen Kombinationen erfindungswesentlich sein können.

Es zeigt:
Figur 1 ein konventionelles Elektromotorschalt- und -schutzsystem;
Figur 2 ein erfindungsgemäßes Elektromotorschalt- und -schutzsystem mit einer erfindungsgemäßen Schalteinrichtung als erstes Ausführungsbeispiel;
Figur 3 eine Ausschnittsdarstellung zu Figur 2 mit Einzelheiten des Mikrorelaisschalters;
Figur 4 eine Alternative zu Figur 2 als zweites Ausführungsbeispiel;
Figur 5 eine weitere Alternative zu den Figuren 2 und 4 als drittes Ausführungsbeispiel;
Figur 6 ein Zeitdiagramm zur Erläuterung des zweiten Ausführungsbeispiels aus Figur 4; und
Figur 7 ein weiteres Zeitdiagramm zur Erläuterung des dritten Ausführungsbeispiels aus Figur 5.

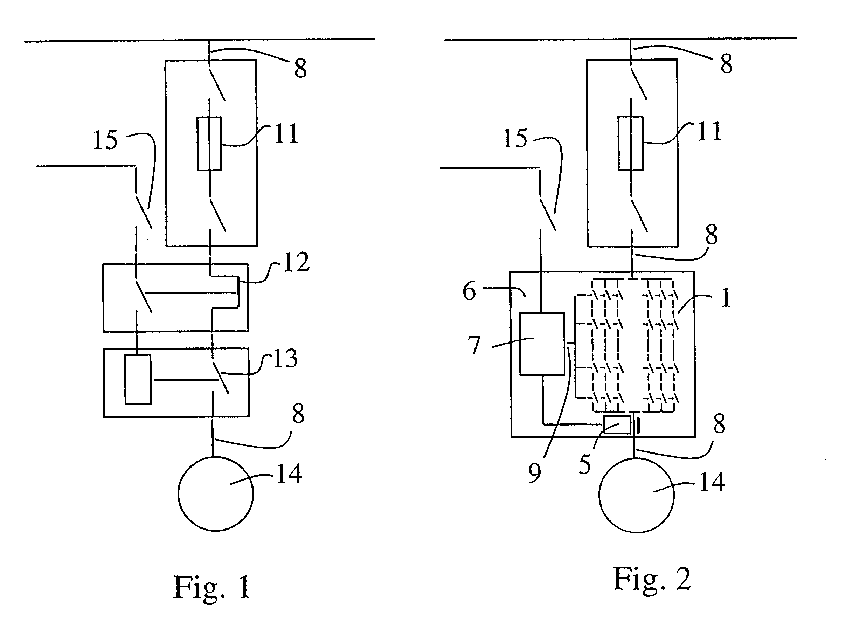

Zunächst zeigt Figur 1 den Stand der Technik. Dabei weist eine Einrichtung zum Schalten und zum Schutz eines Elektromotors 14 in einem den Elektromotor 14 versorgenden Strompfad 8 eine Schmelzsicherung 11 zum Schutz gegen sehr große Überströme und eine Kombination aus einem thermischen Relais 12 und einem elektromagnetischen Schütz 13 zum Schutz gegen kleine Überströme auf. Das thermische Relais 12 erfaßt kleine Überströme durch die Erwärmung eines Bimetallstreifens, wobei der sich öffnende Bimetallstreifen die Stromversorgung des elektromagnetischen Schützes 13 unterbricht, woraufhin sich dieses öffnet und damit die Leistungsversorgung des Elektromotors 14 unterbricht. Ein Schalter 15 in der Versorgung des elektromagnetischen Schützes 13 dient zum Ein- und Ausschalten des Elektromotors 14 im Normalbetrieb.

Demgegenüber zeigt Figur 2 eine erfindungsgemäße Anordnung, bei der das thermische Relais 12 und das elektromagnetische Schütz 13 ersetzt sind durch einen Mikrorelaisschalter 1 mit einem auf demselben Chip 6 integrierten Hall-Sensor 5 als Stromsensor und eine Auswerteeinrichtung 7, die über ein Auslösesignal 9 den Mikrorelaisschalter 1 ansteuert. Die übrigen Elemente entsprechen dem konventionellen Beispiel in Figur 1.

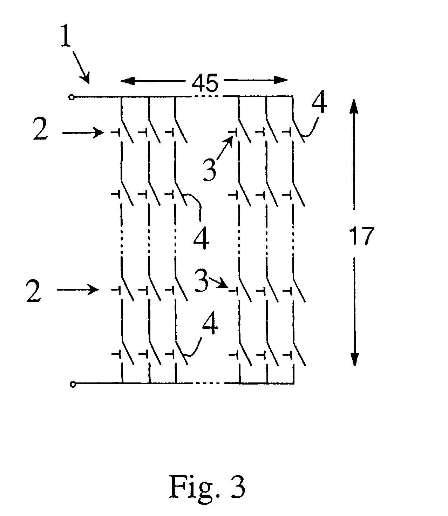

Zunächst soll der Aufbau des Mikrorelaisschalters 1 näher erläutert werden. Figur 3 zeigt hierzu den Mikrorelaisschalter 1 aufgebaut aus 17 seriell geschalteten Stufen 2 mit jeweils 45 parallel geschalteten Mikrorelaiszellen 3. Jede Mikrorelaiszelle 3 entspricht technologisch dem bereits erwähnten Siemens-Siliziummikrorelais und ist mit jeweils einer Mikrorelaiszelle 3 der vorhergehenden und einer der nachfolgenden Stufe 2 elektrisch verbunden. Bei der letzten und bei der ersten der Stufen 2 sind die Anschlüsse zu jeweils der äußeren Seite zusammengeführt und an einen gemeinsamen Anschluß des Mikrorelaisschalteres 1 gelegt.

Man erkennt weiterhin in einer stark schematisierten Darstellung ein bewegliches Kontaktstück 4, das hier einem elektrostatisch verbiegbaren bzw. auslenkbaren Balken entspricht. Wesentlich bei der erfindungsgemäßen Schalteinrichtung ist, daß all diese bewegbaren Kontaktstücke 4 synchron arbeiten, d. h. von einem einzigen gemeinsamen Signal geöffnet und geschlossen werden, insoweit wie Teile eines gemeinsam aufgebauten einheitlichen Schalters wirken.

Jede einzelne Mikrorelaiszelle 3 kann eine Spannung von etwa 24 V unterbrechen, so daß sich für den Mikrorelaisschalter 1 eine abschaltbare Spannung von 400 V ergibt. Dies ist ein für viele Anwendungen günstiger Wert, bevorzugt sind insbesondere Werte über 200 bzw. 300 V.

Der schaltbare Laststrom für jede Mikrorelaiszelle 3 beträgt etwa 200 mA und ergibt damit einen Gesamtstrom von etwa 9 A für den Mikrorelaisschalter 1.

Diese Werte sind so gewählt, daß sie sich direkt mit einem konventionellen Standardschütz (z. B. A9-Schütz (ABB Control, Frankreich)) vergleichen lassen. Dieses elektromagnetische Standardrelais mit 400 V trennbarer Spannung und 9 A schaltbarem Laststrom verbraucht eine Aktivierungsleistung von 2 W. Demgegenüber ergibt sich für den gesamten Mikrorelaisschalter 1 der erfindungsgemäßen Schalteinrichtung eine Aktivierungsleistung von nur 5 mW, die um mehr als einen Faktor 500 kleiner ist. Bei der gegenwärtigen Technologie liegen die Verlustleistungen im leitenden Zustand bei dem konventionellen Relais noch etwas niedriger (0,1 W) als für den erfindungsgemäßen Mikrorelaisschalter 1 mit 0,6-6 W. Dieser Wert läßt sich jedoch durch eine weitere Verbesserung der Kontakte und eventuell durch eine Erhöhung der Schließkraft der Mikrorelais wesentlich senken. Insbesondere in Anbetracht der außerordentlich niedrigen Aktivierungsleistung besteht bei der Schließkraft erkennbar Spielraum.

Beim Vergleich dieser Werte ist zu beachten, daß konventionelle Schütze leistungslos ausgeschaltet sind, d. h. im eingeschalteten Zustand die genannte Aktivierungsleistung verbrauchen. Daher verbraucht beispielsweise das Schütz A9 im eingeschalteten Zustand etwa 2,1 W und somit ein Vielfaches des mit der Erfindung erzielbaren Wertes.

Figur 2 zeigt den der erfindungsgemäßen Schalteinrichtung entsprechenden Si-Chip 6 mit dem bereits anhand Figur 3 beschriebenen Mikrorelaisschalter 1. Zusätzlich ist unterhalb einer äußersten (in der Figur untersten) Stufe 2 des Mikrorelaisschalters 1 der Hall-Sensor 5 vorgesehen. Es handelt sich dabei um einen auf dem Si-Chip 6 integrierten Hall-Sensor in einer für radiale Magnetfelder, wie sie bei linienförmigen Stromleitern auftreten, geeigneten Konfiguration. Hierzu wird verwiesen auf die bereits zitierte Veröffentlichung "Cylindrical Hall Device". Der Hall-Sensor 5 benötigt eine Ansteuerleistung von etwa 60-360 mW.

Über eine Anschlußleitung wird dieser Hall-Sensor 5 gesteuert von der Auswerteeinrichtung 7, die das Ausgangssignal des Hall-Sensors 5 auswertet und an den Hallsensor 5 den entsprechenden Strom anlegt. Und zwar vergleicht die Auswerteeinrichtung 7 das Ausgangssignal des Hall-Sensors 5 mit einem Schwellenwert zur Definition von Überströmen. Bei Erfassung eines über einem einstellbaren Schwellenwert liegenden Stromes spricht die Auswerteeinrichtung 7 an und gibt über die Leitung 9 ein Auslösesignal an den Mikrorelaisschalter 1, d. h. schaltet zwischen dem leitenden und offenen Zustand des Mikrorelaisschalters 1 um. Es werden alle beweglichen Kontaktstücke 4 der einzelnen Mikrorelaiszellen 3 gleichzeitig geöffnet bzw. gleichzeitig geschlossen.

Dabei kann eine Zeitverzögerung eingebaut sein, die ein zu schnelles Ansprechen des Mikrorelaisschalters 1 vor dem Kurzschlußstrombegrenzer verhindert. Dies hat den Grund, daß bei einem zu schnellen Ansprechen des Mikrorelaisschalters 1 bei großen abzuschaltenden Strömen diese großen Ströme von dem Mikrorelaisschalter 1 unterbrochen werden müssen. Insoweit kann es also vorteilhaft sein, den Öffnungsvorgang des Mikrorelaisschalters 1 soweit zu verzögern, daß jedenfalls bei den den Mikrorelaisschalter 1 gefährdenden oder zerstörenden Strömen bei dieser Zeitverzögerung bereits der Kurzschlußstrombegrenzer seine Funktion ausübt. Dabei ist zu beachten, daß das Ansprechverhalten vieler Kurzschlußstrombegrenzer, beispielsweise von Schmelzsicherungen oder von Bimetallauslösemechanismen von Leistungsschaltern, mit zunehmendem abzuschaltenden Strom immer schneller wird. Umgekehrt ist das Ansprechverhalten bei kleineren abzuschaltenden Strömen langsamer. Insoweit kann die Zeitverzögerung des Mikrorelaisschalters 1 genau soweit gewählt werden, daß bei dieser Zeitverzögerung bei allen den Mikrorelaisschalter 1 gefährdenden Strömen bereits der Kurzschlußstrombegrenzer unterbricht.

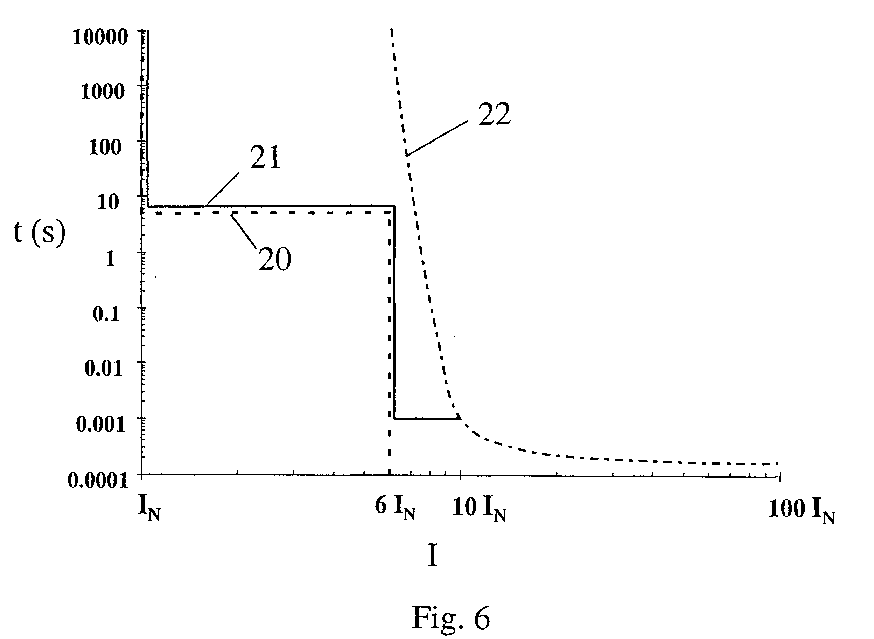

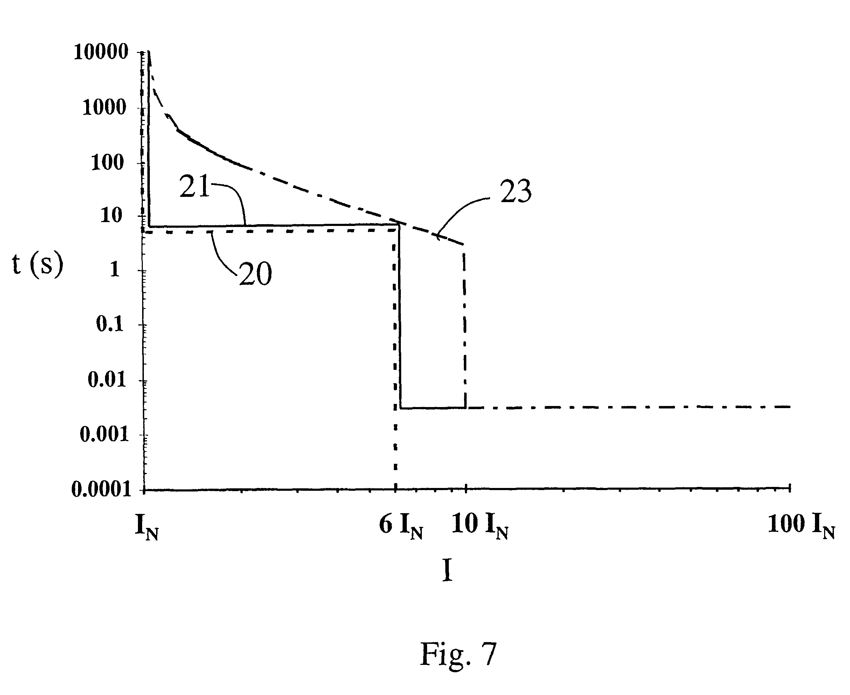

Die Ansteuerung des Mikrorelaisschalters 1 durch eine Auswerteeinrichtung 7 ermöglicht es insbesondere, das Ansprechverhalten des Mikrorelaisschalters 1 in Abhängigkeit von der Größe des gemessenen abzuschaltenden Stromes zu steuern, d. h. den Mikrorelaisschalter 1 bei sehr großen Überströmen stärker verzögert ansprechen zu lassen. Es ist ferner möglich, z. B. bei der Anwendung in einem Elektromotorschalt- und -schutzsystem mit dem Ansprechverhalten des Mikrorelaisschalters auf den gegenüber dem Nennstrom typischerweise um einen Faktor (z. B. 6) erhöhten Motoranlaufstrom Rücksicht zu nehmen. Dies bedeutet, daß die Auswerteeinrichtung 7 beim Anlaufen des Motors einen höheren Schwellenwert anwendet als im Dauerbetrieb, so daß der Schwellenwert in der Anlaufphase etwas über dem Motoranlaufstrom und in der Normalbetriebsphase etwas über dem Motomennstrom liegt. Hierzu wird auf die Figuren 6 und 7 und die zugehörige, noch folgende Beschreibung verwiesen.

Die Auswerteeinrichtung 7 ist bei diesen Ausführungsbeispielen als integrierte Si-Analogschaltung ausgeführt.

Sie kann ferner bei Bedarf eine Zeitgeberschaltung 8 enthalten, die hier nicht gesondert eingezeichnet ist.

Insgesamt läßt sich durch die Erfindung auf dem Siliziumchip 6 die Funktion eines konventionellen Schützes mit Ansteuerelektronik und Stromsensor verwirklichen. Dabei ergibt sich ein Bauvolumen von größenordnungsmäßig (30 x 50 x 1) mm³ bei einem Gewicht von etwa 10 g gegenüber vergleichbaren Werten bei dem bereits erwähnten konventionellen elektromagnetischen Schütz A9 von (44 x 74 x 74) mm³ und 340 g.

Bei dem ersten Ausführungsbeispiel in Figur 2 ist mit dem Mikrorelaisschalter 1 in dem Strompfad 8 eine Schmelzsicherung 11 gemäß Figur 1 in Reihe geschaltet. Die Schmelzsicherung 11 dient als Kurzschlußstrombegrenzer und ist nicht gesondert angesteuert. Sie spricht durch thermische Überlastung eines aufschmelzenden Drahtes oder einer Leiterbahn selbständig an und muß dementsprechend ausgetauscht werden. Dazu ist der Schmelzsicherung 11 ein Schalter vorgeschaltet und ein weiterer Schalter nachgeschaltet, um die Klemmen der Schmelzsicherung 11 zum Austauschpotential freischalten zu können. Der Schalter zwischen der Schmelzsicherung 11 und dem Mikrorelaisschalter 1 ist deswegen sinnvoll, weil der Mikrorelaisschalter 1 im allgemeinen keine unmittelbare Sichtkontrolle seines Öffnungszustandes erlaubt und nach Durchgang sehr großer Ströme unter Umständen die bewegbaren Kontaktstücke 4 verschweißt sein könnten. Daher bietet ein konventioneller mechanischer Schalter eine größere Gewähr für Potentialfreiheit der entsprechenden Klemme der Schmelzsicherung 11.

Der hier eingezeichnete Strompfad 8 kann tatsächlich auch einer mehrphasigen Leitung entsprechen. Es kann jedoch auch eine andere Phase ununterbrochen zum Elektromotor 14 geführt sein, so daß die erfindungsgemäße Schalteinrichtung nur einen von beispielsweise zwei versorgenden Strompfaden unterbricht. Im allgemeinen kommt hier die Phasenleitung in Frage, wohingegen der Nulleiter ununterbrochen durchgeführt werden kann.

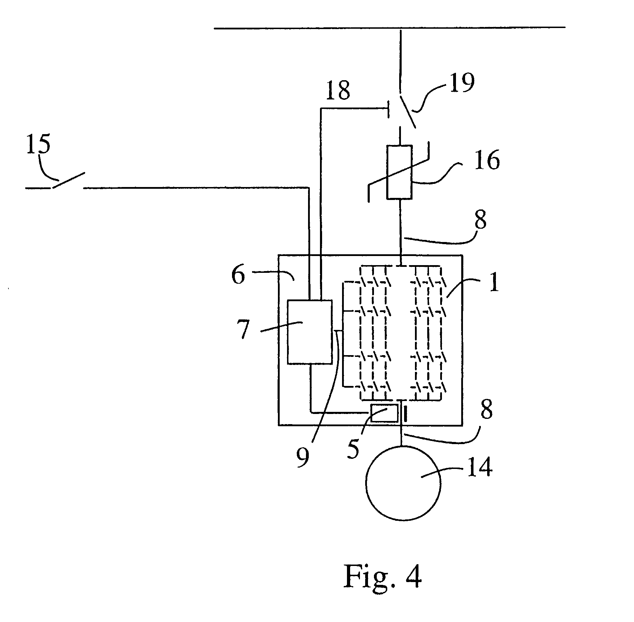

Eine alternative zweite Ausführungsform zeigt Figur 4. Hierin ist die Schmelzsicherung 11 ersetzt durch einen PTC-Polymerwiderstand 16, der als Kurzschlußstrombegrenzer in der bereits beschriebenen Weise große Überströme durch ein sehr starkes Ansteigen des elektrischen Widerstandswertes auf sehr kleine Ströme begrenzt, wobei der Mikrorelaisschalter 1 zusätzlich eine galvanische Trennung bewirken kann. Hinsichtlich der Möglichkeit einer Steuerung des zeitlichen Ansprechverhaltens des Mikrorelaisschalters 1 gelten die obigen Ausführungen und die Erläuterungen zu den Figuren 6 und 7. Auch der PTC-Polymerwiderstand 16 zeigt ein bei großen Überströmen zunehmend schnelles Ansprechverhalten.

Der PTC-Polymerwiderstand 16 ist ein repetitives Element und muß nach seinem Ansprechen nicht ausgetauscht werden. Wenn der Überstrom abgeschaltet ist, kühlt der PTC-Polymerwiderstand 16 auf Normaltemperatur ab und befindet sich damit wieder im Ausgangszustand. Der wesentliche Vorteil eines PTC-Polymerwiderstandes im Vergleich zu einem PTC-Metallwiderstand besteht darin, daß ein PTC-Polymerwiderstand einen so schlagartigen Widerstandsanstieg über so erhebliche Faktoren der Erhöhung des elektrischen Widerstandes zeigt, daß er den Strompfad praktisch auftrennt. Um entsprechend belastbar zu sein und auch um im Normalzustand keinen zu hohen Ohmschen Widerstand einzubringen, setzt ein PTC-Polymerwiderstand jedoch eine gewisse Querschnittsfläche voraus.

Typische Größenordnungen könnten beispielsweise bei einem maximalen Abschaltstrom von 10A des Mikrorelaisschalters 1 bei einem Motor-Nennstrom bzw. von 1 A liegen, wobei der PTC-Polymerwiderstand 16 bei etwa 10 A anspricht. Ein typisches Volumen eines gemäß der bereits zitierten Anmeldung 198 33 609.8 vom 25.07.98 gestalteten PTC-Polymerwiderstandes 16 läge bei etwa 4 cm x 2 mm (Querschnittsfläche) x 2 cm (einschließlich Metallkontakten).

Die in Figur 4 eingezeichnete Signalleitung 18 führt von der Auswerteeinrichtung 7 zu einem in Reihe mit dem PTC-Polymerwiderstand 16 und dem Mikrorelaisschalter 1 geschalteten Lastschalter 19. Dieser Lastschalter 19 kann, falls der PTC-Polymerwiderstand 16 versagt hat oder durch ein zu spätes Ansprechen ein Verschweißen der bewegbaren Kontaktstücke 4 des Mikrorelaisschalters 1 nicht mehr verhindert werden konnten, zum Auftrennen des Strompfades und Unterbrechen des Stromes verwendet werden. Dazu prüft die Auswerteeinrichtung 7 nach Ablauf einer gewissen Zeitspanne nach einer erstmaligen Erfassung eines zu hohen Stromes mit Hilfe des Hallsensors 5 ein weiteres Mal den Strom und aktiviert, falls dieser noch nicht unterbrochen worden ist, über die Signalleitung 18 den Lastschalter 19. Dieser kann dann zumindest für die durch den Mikrorelaisschalter 1 nicht mehr mögliche galvanische Trennung eines ansonsten durch den PTC-Polymerwiderstand 16 begrenzten Stromes sorgen, bei ausreichendem Schaltvermögen jedoch auch den Strom unterbrechen. In entsprechender Weise kann natürlich auch einer der in Figur 2 eingezeichneten Schalter vor und hinter der Schmelzsicherung 11 über eine Signalleitung 18 angesteuert sein.

Im übrigen entspricht das zweite Ausführungsbeispiel dem ersten aus Figur 2.

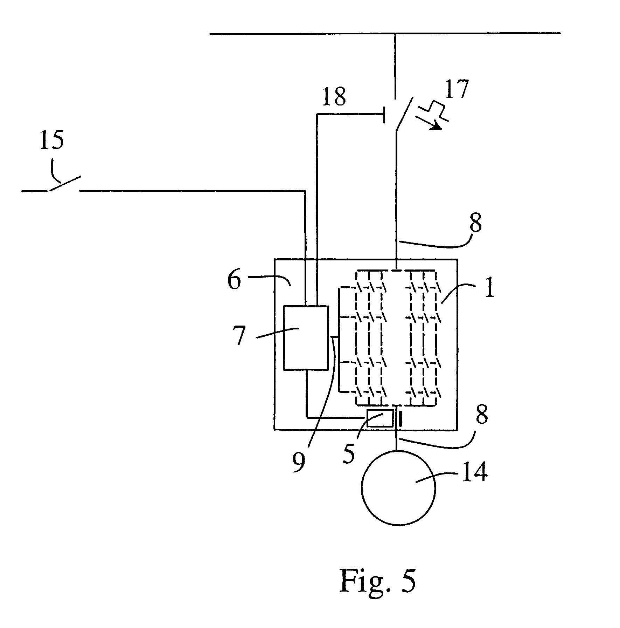

Ein drittes Ausführungsbeispiel zeigt Figur 5. Hier ist anstelle der Schmelzsicherung 11 aus Figur 2 und des PTC-Widerstandes 16 aus Figur 4 ein Leistungsschutzschalter 17 eingefügt. Im übrigen entspricht dieses Ausführungsbeispiel ebenfalls den beiden aus den Figuren 2 und 4. Wird ein konventioneller Leistungsschutzschalter 17 verwendet, so verfügt er gewöhnlich über einen eigenen Auslösemechanismus, beispielsweise durch einen bei Kurzschlußströmen ansprechenden induktiven Antrieb. Alternativ dazu kann jedoch auch eine elektrische Auslösung durch ein über eine Leitung 18 (vgl. Figur 4) abgegebenes weiteres Auslösesignal der Auswerteeinrichtung 7 vorgesehen sein. Die Leitung 18 in Figur 5 ist also als optionales Merkmal zu betrachten. Dabei ist es ferner möglich, zwar die konventionelle induktive Kurzschlußstromauslösung des Leistungsschutzschalters 17 beizubehalten, jedoch auf die konventionellerweise ebenfalls vorgesehene Bimetallauslösung bei kleineren Überströmen zu verzichten. Diese kann dann durch eine über die Leitung 18 von der Auswerteeinrichtung 7 bewirkte Auslösung ersetzt werden.

Ein Ausführungsbeispiel mit einer Fehlerstromschutzfunktion würde sich von den hier dargestellten Ausführungsbeispielen lediglich dadurch unterscheiden, daß die Auswerteeinrichtung 7 entsprechende Zusatzfunktionen aufweist und daß der Hall-Sensor 5 den Gesamtstrom durch zwei benachbarte Strompfade erfaßt bzw. das zwei Hall-Sensoren vorgesehen sind.

Figur 6 zeigt ein Beispiel für das zeitliche Ansprechverhalten des Mikrorelaisschalters 1 und des PTC-Polymerwiderstands 16 aus Figur 4 bei dem bevorzugten Ausführungsbeispiel eines Elektromotorschalt- und -schutzsystems. Die mit I bezeichnete Stromachse zeigt einen Motornennstrom I_{N} (in diesem Fall 1 A) und einen das 6fache des Motornennstroms I_{N} betragenden Motoranlaufstrom. Die mit t bezeichnete Zeitachse zeigt an ihrem unteren Ende das physikalisch schnellstmögliche Ansprechverhalten des Mikrorelaisschalters mit (als Beispiel) 0,0001 s und die typische Zeitdauer des Motoranlaufstroms mit 5 s. Die gestrichelte Linie mit der Bezugsziffer 20 zeigt schematisiert das Anlaufverhalten des Elektromotors, der etwa 5 s lang den Strom 6 I_{N} und danach den Strom I_{N} zieht. Dementsprechend muß die Ansprechcharakteristik des Mikrorelaisschalters 1 bzw. der Auswerteeinrichtung 7 angepaßt sein, wie mit der Linie 21 symbolisiert. Dieses Ansprechverhalten ist schaltungstechnisch in der Auswerteeinrichtung 7 realisiert. Die Linie 22 zeigt ein typisches Ansprechverhalten des PTC-Polymerwiderstands 16 mit bei großen Strömen zunehmender Schnelligkeit des Ansprechens.

Dabei ist die physikalisch vorgegebene Zeitverzögerung von 0,0001 s mit Hilfe der Auswerteeinrichtung erhöht worden, um den Schnittpunkt des untersten waagerechten Abschnitts der Linie 21 mit der Linie 22 zu kleineren Stromwerten hin zu verschieben, um also die bei schnellerem Ansprechen durch den Mikrorelaisschalter 1 zu schaltenden Ströme zu verkleinern. Dabei ist der Wert von 0,1 s ein typischer Wert für das Ansprechverhalten eines konventionellen Schützes. Auch bei einem besseren Wert eines Schützes von etwa 0,03 s ist der hier gewählte Wert des Mikrorelaisschalters von 0,001 s so erheblich geringer, daß also auch bei Zugeständnissen im Hinblick auf die beschriebene Verringerung des schnell zu schaltenden Stromes noch erhebliche Verbesserungen im Vergleich zum Stand der Technik möglich sind.

Figur 7 zeigt ein zu Figur 6 analoges Diagramm, jedoch bezogen auf das Ausführungsbeispiel aus Figur 5. Dabei zeigt die Linie 23 das Ansprechverhalten des Leistungsschutzschalters 17, der im oberen Bereich durch eine konventionelle Bimetall-Überstromauslösung und im unteren waagerecht verlaufenden Bereich der Kurve 23 durch die stromunabhängig weitgehend konstante Ansprechzeit des elektromagnetischen Schlagankers bestimmt ist. Wenn das Ansprechverhalten des Mikrorelaisschalters 1 durch die Auswerteeinrichtung 7 soweit verzögert wird, daß sich bei großen Strömen ein demgegenüber früheres Ansprechen des Leistungsschalters nach etwa 0,003-0,005 s ergibt, liegen diese Werte noch erheblich unter den erwähnten konventionellen Werten. Dazu ist Voraussetzung, daß der Mikrorelaisschalter 1 Ströme unterhalb der Auslöseschwelle des elektromagnetischen Schlagankers, im hier beschriebenen Beispiel unterhalb 10 I_{N}, unterbrechen kann. Man erkennt, daß die Verwendung des erfindungsgemäßen Mikrorelaisschalters 1 den Vorteil bietet, im Bereich der ansonsten über die Bimetallauslösung des Leistungsschutzschalters 17 oder ein elektromagnetisches Schütz abzuschaltenden Ströme ein zumindest mit der Ansprechzeit des elektromagnetischen Schlagankers abgestimmtes Ansprechverhalten zu bieten. Im Prinzip könnte man im Bereich der durch den Mikrorelaisschalter 1 abschaltbaren Ströme auch ein noch schnelleres Ansprechverhalten desselben gegenüber dem durch die Ansprechzeit des elektromagnetischen Schlagankers vorbestimmten Wert einstellen. Dann ergäbe sich allerdings eine Stromabhängigkeit des Ansprechverhaltens des Mikrorelaisschalters 1 mit minimaler Ansprechzeit nur bei kleineren Überströmen. Bei diesem Ausführungsbeispiel wird jedoch durchweg eine Ansprechverzögerung angepaßt auf das Ansprechverhalten des Schlagankers gewählt, wobei in der bereits beschriebenen Weise auf den erhöhten Anlaufstrom des Elektromotors Rücksicht genommen wird.

## Patentansprüche

1. Elektrische Schalteinrichtung mit einem in einem Strompfad (8) angeordneten Mikrorelaisschalter (1), welcher eine spannungsteilend wirkende Serienschaltung und eine stromteilend wirkende Parallelschaltung von Mikrorelaiszellen (3) aufweist, mit einem den im Strompfad (8) fliessenden Strom erfassenden Stromsensors (5) und mit einer Auswerteeinrichtung (7) zum Empfangen und Auswerten der vom Stromsensor (5) erfassten Stromsignale und zur Bildung eines auf den Mikrorelaisschalter (1) wirkenden Auslösesignals (9), falls der im Strompfad (8) geführte Strom einen Schwellenwert überschreitet, **dadurch gekennzeichnet, dass** in Serie zum Mikrorelaisschalter (1) geschaltet im Strompfad ein Kurzschlußstrombegrenzer (11, 16, 17) angeordnet ist, und dass die Schalteinrichtung dazu ausgelegt ist, dass sich der Mikrorelaisschalter (1) ansprechend auf das Auslösesignal (9) bei über dem Schwellenwert liegenden, kleinen Überströmen öffnet und der Kurzschlußstrombegrenzer (11, 16, 17) bei großen Überströmen diese auf durch den Mikrorelaisschalter (1) zu unterbrechende Ströme begrenzt.

2. Elektrische Schalteinrichtung nach Anspruch 1, bei der die Auswerteeinrichtung (7) ein in Abhängigkeit von der Höhe eines Überstromes zeitlich geringfügig verzögertes Ansprechen des Mikrorelaisschalters (1) bewirkt.

3. Elektrische Schafteinrichtung nach Anspruch 1 oder 2, bei der der Kurzschlußstrombegrenzer eine Schmelzsicherung (11) ist.

4. Schalteinrichtung nach Anspruch 1 oder 2, bei der der Kurzschlußstrombegrenzer (17) elektrisch betätigbar ist und die Auswerteeinrichtung (7) dazu ausgelegt ist, bei großen Überströmen ein zweites Auslösesignal (18) an den Kurzschlußstrombegrenzer (17) zu senden.

5. Elektrische Schalteinrichtung nach Anspruch 1, 2 oder 3, bei der der Kurzschlußstrombegrenzer ein Leistungsschutzschalter (17) ist.

6. Elektrische Schalteinrichtung nach einem der vorstehenden Ansprüche, bei der der Kurzschlußstrombegrenzer einen PTC-Widerstand (16) aufweist.

7. Elektrische Schalteinrichtung nach Anspruch 6, bei der der PTC-Widerstand (16) ein PTC-Polymermaterial enthält.

8. Elektrische Schalteinrichtung nach Anspruch 6, bei der der PTC-Widerstand (16) ein PTC-Metallmaterial enthält.

9. Elektrische Schalteinrichtung nach einem der vorstehenden Ansprüche, bei der die Auswerteeinrichtung (7) zum Empfangen und Auswerten von Signalen eines den Strom durch den Strompfad (8) erfassenden ersten Stromsensors (5) und eines einen Strom durch einen zweiten Strompfad erfassenden zweiten Stromsensors durch Vergleich untereinander und Öffnen des Mikrorelaisschalters (1) ansprechend auf ein Resultat der Auswertung ausgelegt ist.

10. Elektrische Schalteinrichtung nach einem der Ansprüche 1-8, bei der der Stromsensor (5) ein einen Gesamtstrom durch den Strompfad (8) und zumindest einen zweiten benachbarten Strompfad erfassender Gesamtstromsensor ist und die Auswerteeinrichtung (7) zum Empfangen und Auswerten eines Signals des Gesamtstromsensors und Öffnen des Mikrorelaisschalters (1) ansprechend auf das Signal ausgelegt ist.

11. Elektrische Schalteinrichtung nach einem der vorstehenden Ansprüche, bei der zumindest ein Stromsensor (5) Teil der Schalteinrichtung und durch einen Hall-Sensor gebildet ist.

12. Elektrische Schalteinrichtung nach einem der vorstehenden Ansprüche, bei der der Mikrorelaisschalter, die Auswerteeinrichtung und gegebenenfalls der oder die Hall-Sensoren jeweils als Chips auf einer Platine integriert sind.

13. Elektrische Schalteinrichtung nach einem der vorstehenden Ansprüche, bei der der Mikrorelaisschafter (1) und die Auswerteeinrichtung (7) auf einem Chip (6) integriert sind.

14. Elektrische Schalteinrichtung nach Anspruch 11, auch in Verbindung mit einem weiteren der vorstehenden Ansprüche, bei der die Auswerteeinrichtung (7) und der oder die Hall-Sensoren (5) auf einem Chip (6) integriert sind.

15. Elektrische Schalteinrichtung nach Anspruch 11, auch in Verbindung mit einem weiteren der vorstehenden Ansprüche, bei der der Mikrorelaisschalter (1), die Auswerteeinrichtung (7) und der oder die Hall-Sensoren (5) auf einem Chip (6) integriert sind.

16. Elektrische Schalteinrichtung nach einem der vorstehenden Ansprüche, bei der mit dem Mikrorelaisschalter (1) eine elektronische Ansprechüberwachungseinrichtung (7) auf einem Chip (6) integriert ist.

17. Elektrische Schalteinrichtung nach einem der vorstehenden Ansprüche, bei der mit dem Mikrorelaisschalter (1) eine Zeitgeberschaltung auf einem Chip (6) integriert ist.

18. Elektromotorschalt- und -schutzsystem mit einer elektrischen Schalteinrichtung nach einem der vorstehenden Ansprüche.

## Claims

1. An electrical switching device having a microrelay switch (1) which is arranged in a current path (8) and has microrelay cells (3) connected in series as a voltage divider and connected in parallel as a current divider, having a current sensor (5) which detects the current flowing in the current path (8), and having an evaluation device (7) for receiving and evaluating the current signals detected by the current sensor (5) and for forming a tripping signal (9), which acts on the microrelay switch (1), if the current being carried in the current path (8) exceeds a threshold value, **characterized in that** a short-circuit current limiter (11, 16, 17) is arranged in the current path such that it is connected in series with the microrelay switch (1), and **in that** the switching device is designed such that the microrelay switch (1) opens in response to the tripping signal (9) for small overcurrents that are greater than the threshold value, and, in the event of large overcurrents, the short-circuit current limiter (11, 16, 17) limits these overcurrents to currents which can be interrupted by the microrelay switch (1).

2. The electrical switching device as claimed in claim 1, in which the evaluation device (7) causes the microrelay switch (1) to respond with a short time delay as a function of the magnitude of an overcurrent.

3. The electrical switching device as claimed in claim 1 or 2, in which the short-circuit current limiter is a fuse (11).

4. The switching device as claimed in claim 1 or 2, in which the short-circuit current limiter (17) can be tripped electrically, and the evaluation device (7) is designed to transmit a second tripping signal (18) to the short-circuit current limiter (17) in the event of large overcurrents.

5. The electrical switching device as claimed in claim 1, 2 or 3, in which the short-circuit current limiter is a circuit breaker (17).

6. The electrical switching device as claimed in one of the preceding claims, in which the short-circuit current limiter is a PTC resistor (16).

7. The electrical switching device as claimed in claim 6, in which the PTC resistor (16) contains a PTC polymer material.

8. The electrical switching device as claimed in claim 6, in which the PTC resistor (16) contains a PTC metal material.

9. The electrical switching device as claimed in one of the preceding claims, in which the evaluation device (7) is designed for receiving and evaluating signals from a first current sensor (5), which detects the current through the current path (8), and from a second current sensor, which detects a current through a second current path, by comparing them with one another and opening the microrelay switch (1) in response to a result of the evaluation.

10. The electrical switching device as claimed in one of claims 1-8, in which the current sensor (5) is a total current sensor which detects a total current through the current path (8) and through at least one second adjacent current path, and the evaluation device (7) is designed for receiving and evaluating a signal from the total current sensor and for opening the microrelay switch (1) in response to that signal.

11. The electrical switching device as claimed in one of the preceding claims, in which at least one current sensor (5) is part of the switching device and is in the form of a Hall sensor.

12. The electrical switching device as claimed in one of the preceding claims, in which the microrelay switch, the evaluation device and, possibly, the Hall sensor or sensors are each integrated as chips on a circuit board.

13. The electrical switching device as claimed in one of the preceding claims, in which the microrelay switch (1) and the evaluation device (7) are integrated on one chip (6).

14. The electrical switching device as claimed in claim 11, also in conjunction with any further one of the preceding claims, in which the evaluation device (7) and the Hall sensor or Hall sensors (5) are integrated on a chip (6).

15. The electrical switching device as claimed in claim 11, also in conjunction with any further one of the preceding claims, in which the microrelay switch (1), the evaluation device (7) and the Hall sensor or Hall sensors (5) are integrated on a chip (6).

16. The electrical switching device as claimed in one of the preceding claims, in which an electronic response monitoring device (7) is integrated, with the microrelay switch (1), on a chip (6).

17. The electrical switching device as claimed in one of the preceding claims, in which a timer circuit is integrated, with the microrelay switch (1), on a chip (6).

18. An electric motor switching and protection system having an electrical switching device as claimed in one of the preceding claims.

## Revendications

1. Mécanisme de coupure électrique comprenant un micro-conjoncteur (1) monté sur un trajet de courant (8), présentant un montage en série diviseur de tension et un montage en parallèle de cellules de micro-relais (3) diviseur de courant, avec un capteur de courant (5) captant le courant sur le trajet de courant (8) et une unité d'évaluation (7) pour la réception et l'évaluation des signaux du courant interceptés par le capteur de courant (5) et pour la formation d'un signal de déclenchement (9) agissant sur le micro-conjoncteur (1), au cas où le courant conduit par la voie du courant (8) dépasserait une valeur seuil, **caractérisé en ce que** un limiteur de courant de court-circuit (11, 16, 17) connecté en série au micro-conjoncteur (1) soit disposé sur le trajet du courant, et que le mécanisme de coupure soit conçu pour que le micro-conjoncteur (1) réagissant au signal de déclenchement (9) s'ouvre en présence de petits courants de surcharge dépassant la valeur seuil et que le limiteur de courant de court-circuit (11, 16, 17), en présence de courants de surcharge importants, limite ceux-ci à des courants qui sont à couper par le micro-conjoncteur (1).

2. Mécanisme de coupure électrique selon la revendication 1, pour lequel l'unité d'évaluation (7) provoque un déclenchement temporel légèrement retardé du micro-conjoncteur (1) en fonction de la grandeur du courant de surcharge.

3. Mécanisme de coupure électrique selon la revendication 1 ou 2, pour lequel le limiteur de courant de court-circuit est un fusible (11).

4. Mécanisme de coupure électrique selon la revendication 1 ou 2, pour lequel le limiteur de courant de court-circuit (17) est actionnable électriquement et l'unité d'évaluation (7) est conçue de manière à envoyer un second signal de déclenchement (18) au limiteur de courant de court-circuit (17) en présence de courants de surcharge importants.

5. Mécanisme de coupure électrique selon la revendication 1, 2 ou 3, pour lequel le limiteur de courant de court-circuit est un interrupteur de puissance (17).

6. Mécanisme de coupure électrique selon l'une des revendications ci-dessus, pour lequel le limiteur de courant de court-circuit présente une résistance PTC (16).

7. Mécanisme de coupure électrique selon la revendication 6, pour lequel la résistance PTC (16) contient un matériau polymère PTC.

8. Mécanisme de coupure électrique selon la revendication 6, pour lequel la résistance PTC (16) contient un matériau métallique PTC.

9. Mécanisme de coupure électrique selon l'une des revendications ci-dessus, pour lequel l'unité d'évaluation (7) soit conçue pour la réception et l'évaluation des signaux d'un premier capteur de courant (5) interceptant le courant à partir du trajet du courant (8) et d'un deuxième capteur de courant interceptant un courant à partir d'un deuxième trajet de courant par comparaison ainsi que pour l'ouverture du micro-conjoncteur (1) répondant à un résultat de l'évaluation.

10. Mécanisme de coupure électrique selon l'une des revendications 1-8, pour lequel le capteur de courant (5) est un capteur de courant total interceptant un courant total à partir du trajet du courant (8) et d'au moins un deuxième trajet de courant, et pour lequel l'unité d'évaluation (7) soit conçue pour la réception et l'évaluation d'un signal du capteur de courant total et pour l'ouverture du micro-conjoncteur (1) répondent au signal.

11. Mécanisme de coupure électrique selon l'une des revendications ci-dessus, pour lequel un capteur de courant (5) au moins fait partie du mécanisme de coupure et est constitué à partir d'un capteur à effet Hall.

12. Mécanisme de coupure électrique selon l'une des revendications ci-dessus, pour lequel le micro-conjoncteur, l'unité d'évaluation et le cas échéant le ou les capteurs à effet Hall sont respectivement intégrés en tant que puces sur une platine.

13. Mécanisme de coupure électrique selon l'une des revendications ci-dessus, pour lequel le micro-conjoncteur (1) et l'unité d'évaluation (7) sont intégrés sur une puce (6).

14. Mécanisme de coupure électrique selon la revendication 11, également en rapport avec une autre des revendications ci-dessus, pour lequel l'unité d'évaluation (7) et le ou les capteurs à effet Hall (5) sont intégrés sur une puce (6).

15. Mécanisme de coupure électrique selon la revendication 11, également en rapport avec une autre des revendications ci-dessus, pour lequel le micro-conjoncteur (1), l'unité d'évolution (7) et le ou les capteurs à effet Hall (5) sont intégrés sur une puce (6).

16. Mécanisme de coupure électrique selon l'une des revendications ci-dessus, pour lequel le micro-conjoncteur (1), un appareil électronique de surveillance de réponse (7) sont intégrés sur une puce (6).

17. Mécanisme de coupure électrique selon l'une des revendications ci-dessus, pour lequel un couplage de générateur d'horloge est intégrée sur une puce (6) avec le micro-conjoncteur (1).

18. Système de protection et de coupure de moteur électrique avec un mécanisme de coupure selon l'un des revendications ci-dessus.
